# EUROPÄISCHE PATENTSCHRIFT

(11) **EP 2 254 757 B1**
(45) Veröffentlichungstag und Bekanntmachung des Hinweises auf die Patenterteilung: **23.04.2014**
(21) Anmeldenummer: 09709671.3
(22) Anmeldetag: 03.02.2009
(51) Int. Cl.: B42D 15/00, B42D 25/00

(54) **SICHERHEITSELEMENT UND VERFAHREN ZU SEINER HERSTELLUNG**
SECURITY ELEMENT AND METHOD FOR PRODUCING THE SAME
ELEMENT DE SÉCURITÉ ET PROCÉDÉ POUR LE PRODUIRE

(30) Priorität: 15.02.2008 DE 102008009296
(43) Veröffentlichungstag der Anmeldung: 01.12.2010
(73) Patentinhaber: Giesecke & Devrient GmbH, 81677 München (DE)
(72) Erfinder: HEIM, Manfred, 83646 Bad Tölz (DE)
(86) Internationale Anmeldenummer: PCT/EP2009/000686
(87) Internationale Veröffentlichungsnummer: WO 2009/100831

(56) Entgegenhaltungen:
- WO-A-01/03945
- WO-A-2007/138293
- DE-A1-102004 039 355
- US-A- 5 331 443

## Beschreibung

Die Erfindung betrifft ein Sicherheitselement zur Absicherung von Wertgegenständen, ein Verfahren zur Herstellung eines derartigen Sicherheitselements sowie ein Sicherheitspapier und einen Datenträger mit einem solchen Sicherheitselement.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Derartige Sicherheitselemente können beispielsweise in Form eines in eine Banknote eingebetteten Sicherheitsfadens, einer Abdeckfolie für eine Banknote mit Loch, eines aufgebrachten Sicherheitsstreifens, eines selbsttragenden Transferelements oder auch in Form eines direkt auf ein Wertdokument aufgebrachten Merkmalsbereichs ausgebildet sein.

Eine besondere Rolle bei der Echtheitsabsicherung spielen Sicherheitselemente, die betrachtungswinkelabhängige visuelle Effekte zeigen, da diese selbst mit modernsten Kopiergeräten nicht reproduziert werden können. Die Sicherheitselemente werden dazu mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/oder ein anderes graphisches Motiv zeigen.

In diesem Zusammenhang ist bekannt, Sicherheitselemente mit mehrschichtigen Dünnschichtelementen einzusetzen, deren Farbeindruck sich für den Betrachter mit dem Betrachtungswinkel ändert und beim Kippen des Sicherheitsmerkmals beispielsweise von Grün nach Blau, von Blau nach Magenta oder von Magenta nach Grün wechselt. Das Auftreten derartiger Farbänderungen beim Verkippen eines Sicherheitselements wird im Folgenden als Farbkippeffekt bezeichnet.

WO-A- 01/03945 zeigt den Stand der Technik.

Ausgehend davon liegt der Erfindung die Aufgabe zugrunde, ein Sicherheitselement der eingangs genannten Art weiter zu verbessern und insbesondere ein Sicherheitselement mit einem attraktiven visuellen Erscheinungsbild und hoher Fälschungssicherheit zu schaffen.

Diese Aufgabe wird durch das Sicherheitselement mit den Merkmalen des Hauptanspruchs gelöst. Ein Verfahren zur Herstellung eines derartigen Sicherheitselements, ein Sicherheitspapier und ein Datenträger sind in den nebengeordneten Ansprüchen angegeben. Weiterbildungen der Erfindung sind Gegenstand der Unteransprüche.

Gemäß der Erfindung enthält ein Sicherheitselement der eingangs genannten Art
- ein Dünnschichtelement mit Farbkippeffekt, das eine Absorberschicht mit Aussparungen enthält, in deren Bereich kein Farbkippeffekt erkennbar ist, und
- eine Reliefstruktur, die nur in ausgesparten Absorberschichtbereichen unterhalb des Dünnschichtelements angeordnet ist.

Die Erfindung beruht dabei auf dem Gedanken, eine gegenseitige visuelle Beeinflussung des Farbkippeffekts des Dünnschichtelements einerseits und des optisch variablen Effekts der Reliefstruktur andererseits dadurch zu vermeiden, dass die Reliefstruktur nur unterhalb von Aussparungen der Absorberschicht des Dünnschichtelements angeordnet wird. Insbesondere sind die Reliefstruktur und die Aussparungen der Absorberschicht passergenau übereinander angeordnet, während außerhalb der ausgesparten Absorberschichtbereiche keine Reliefstruktur vorliegt. Für den visuellen Eindruck einer perfekten Passerung ist es dann erfindungsgemäß nicht erforderlich, das Dünnschichtelement selbst gepassert zu der Reliefstruktur anzuordnen. Zugleich können der Farbkippeffekt des Dünnschichtelements und der optisch variable Effekt der Reliefstruktur unabhängig voneinander und störungsfrei wahrgenommen werden.

Die Aussparungen in der Absorberschicht liegen bevorzugt in Form von Zeichen, Mustern oder Codierungen vor.

Vorzugsweise liegt die Reliefstruktur in einer Prägelackschicht vor. Die Reliefstruktur kann dabei eine diffraktive Struktur darstellen, wie etwa ein Hologramm, ein holographisches Gitterbild oder eine hologrammähnliche Beugungsstruktur, oder auch eine achromatische Struktur, wie etwa eine Mattstruktur mit einem nicht farbigen, silbrig matten Erscheinungsbild, eine Mikrospiegelanordnung, ein Blazegitter mit einem sägezahnartigen Furchenprofil oder eine Fresnellinsen-Anordnung. Die Abmessungen der Strukturelemente der diffraktiven Reliefstrukturen liegen meist in der Größenordnung der Lichtwellenlänge, also in der Regel zwischen 300 nm und 1 µm. Manche Reliefstrukturen weisen auch kleinere Strukturelemente auf, wie etwa Subwellenlängengitter oder Mottenaugenstrukturen, deren Strukturelemente auch kleiner als 100 nm sein können. Die Strukturelemente achromatischer Mikroreliefstrukturen sind teilweise auch größer als 1 µm, die Abmessungen von Mikrospiegeln oder Blazegitterlinien reichen etwa bis zu einer Höhe von etwa 15 µm und einer lateralen Ausdehnung von etwa 30 µm.

Das Dünnschichtelement weist in einer vorteilhaften Erfindungsvariante eine Reflexionsschicht, eine Absorberschicht und eine zwischen der Reflexionsschicht und der Absorberschicht angeordnete dielektrische Abstandsschicht auf. Der Farbkippeffekt beruht bei solchen Dünnschichtelementen auf betrachtungswinkelabhängigen Interferenzeffekten durch Mehrfachreflexionen in den verschiedenen Teilschichten des Elements. Der Wegunterschied des an den verschiedenen Schichten reflektierten Lichts hängt einerseits von der optischen Dicke der dielektrischen Abstandsschicht ab, die den Abstand zwischen Absorberschicht und Reflexionsschicht festlegt, und variiert andererseits mit dem jeweiligen Betrachtungswinkel.

Da der Wegunterschied in der Größenordnung der Wellenlänge des sichtbaren Lichts liegt, ergibt sich aufgrund von Auslöschung und Verstärkung bestimmter Wellenlängen ein winkelabhängiger Farbeindruck für den Betrachter. Durch eine geeignete Wahl von Material und Dicke der dielektrischen Abstandsschicht können eine Vielzahl unterschiedlicher Farbkippeffekte gestaltet werden, beispielsweise Kippeffekte, bei denen sich der Farbeindruck mit dem Betrachtungswinkel von Grün nach Blau, von Blau nach Magenta oder von Magenta nach Grün ändert.

Das Dünnschichtelement kann dabei mit Vorteil in der Reihenfolge Reflexionsschicht, dielektrische Abstandsschicht und Absorberschicht über der Reliefstruktur angeordnet sind. Alternativ wird das Dünnschichtelement in der Reihenfolge Absorberschicht, dielektrische Abstandsschicht und Reflexionsschicht über der Reliefstruktur angeordnet. Der letztere Schichtaufbau eignet sich insbesondere für Sicherheitselemente, die von der Unterseite, also der Rückseite der Trägerfolie her, betrachtet werden sollen, während der erstgenannte Schichtaufbau insbesondere für Sicherheitselemente geeignet ist, die von der Oberseite her betrachtet werden.

Die Reflexionsschicht des Dünnschichtelements ist vorzugsweise durch eine opake oder durch eine semitransparente Metallschicht, insbesondere aus Aluminium gebildet. Als Reflexionsschicht kann auch eine zumindest bereichsweise magnetische Schicht verwendet werden, so dass ein weiteres Echtheitsmerkmal integriert werden kann, ohne eine zusätzliche Schicht im Schichtaufbau zu erfordern.

Die Reflexionsschicht kann weiter Aussparungen in Form von Mustern, Zeichen oder Codierungen aufweisen, die transparente oder semitransparente Bereiche in dem Dünnschichtelement bilden. In den transparenten oder semitransparenten Aussparungsbereichen bietet sich dem Betrachter ein auffälliger Kontrast zu den umgebenden Farbeffekten. Insbesondere können die Muster, Zeichen oder Codierungen im Durchlicht hell aufleuchten, wenn das Dünnschichtelement auf einen transparenten oder transluzenten Träger aufgebracht ist. Die Aussparungen in den Reflexionsschichten können auch rasterartig, vorzugsweise mit einem geringen Flächenanteil von 40% oder weniger angelegt sein, so dass sie im Auflicht praktisch nicht auffallen und nur im Durchlicht in Erscheinung treten.

Das Dünnschichtelement kann nach einer anderen, ebenfalls vorteilhaften Erfindungsvariante auch durch zwei Absorberschichten und eine dazwischen liegende dielektrische Abstandsschicht gebildet werden. Auch derartige Dünnschichtelemente zeigen einen Farbkippeffekt, sind aber nicht opak, so dass der Farbkippeffekt auch von der Rückseite des Sicherheitselements sichtbar ist. In dieser Variante genügt es, wenn eine der Absorberschichten die genannten Aussparungen enthält.

In vorteilhaften Abwandlungen der beschriebenen Erfindungsvarianten enthält das Dünnschichtelement eine dielektrische Abstandsschicht, die in ausgesparten Absorberschichtbereichen ebenfalls ausgespart ist. Diese Abwandlung kommt für alle oben genannten Schichtanordnungen des Dünnschichtelements in Betracht.

In allen Gestaltungen ist die dielektrische Abstandsschicht vorzugsweise durch ein Vakuumdampfverfahren erzeugt. Alternativ kann die Abstandsschicht auch durch eine Druckschicht oder durch eine ultradünne Folie, insbesondere eine gereckte Polyesterfolie, gebildet sein. Besonders bevorzugt ist gegenwärtig eine Gestaltung, bei der die dielektrische Abstandsschicht durch eine niedrigbrechende dielektrische Schicht, insbesondere eine aufgedampfte SiO₂-Schicht oder eine MgF₂-Schicht gebildet ist.

Weitere Einzelheiten zum Aufbau derartiger Dünnschichtelemente und zu den für die Reflexionsschicht, die dielektrische Abstandsschicht und die Absorberschicht einsetzbaren Materialien und Schichtdicken können der Druckschrift WO 01/03945 entnommen werden, deren Offenbarung insoweit in die vorliegende Anmeldung aufgenommen wird.

In einer vorteilhaften Weiterbildung der Erfindung ist über dem Dünnschichtelement bereichsweise eine transparente Phasenverzögerungsschicht angeordnet, die für Licht aus dem sichtbaren Wellenlängenbereich eine phasenschiebende Schicht bildet. Phasenverzögernde Schichten, die im Rahmen dieser Beschreibung teilweise auch phasenschiebende Schichten genannt werden, sind optisch aktive Schichten, die auf die Phase einer transmittierten Lichtwelle wirken. Die Teilstrahlen einer einfallenden polarisierten Lichtwelle erhalten dabei aufgrund unterschiedlicher Brechzahlen einen Gangunterschied und somit eine Phasendifferenz. Beträgt die Phasendifferenz der beiden Teilstrahlen gerade eine halbe oder viertel Wellenlänge so erhält man sogenannte λ/2- oder λ/4-Schichten.

Bevorzugt entspricht die Phasenverzögerung der Phasenverzögerungsschicht in der Erfindung einem Gangunterschied zwischen etwa λ/6 und etwa λ/2, besonderes bevorzugt zwischen etwa λ/4 und etwa λ/2. Der Gangunterschied wird dabei modulo λ, also im Bereich zwischen 0 und λ angegeben, da eine Schicht mit einem Gangunterschied beispielsweise von 5/4*λ oder 9/4*λ dieselbe Phasenverzögerung erzeugt wie eine λ/4-Schicht. Bevorzugt ist im Rahmen der Erfindung weiter, dass die phasenschiebende Schicht aus nematischem flüssigkristallinem Material gebildet ist und/oder dass die Phasenverzögerungsschicht in Form von Mustern, Zeichen oder einer Codierung vorliegt.

In einer weiteren vorteilhaften Ausgestaltung der Erfindung ist über dem Dünnschichtelement bereichsweise eine semitransparente Farbschicht angeordnet, wobei der Farbeindruck des Dünnschichtelements bei Betrachtung unter vorbestimmten Betrachtungsbedingungen an den Farbeindruck zumindest eines Teilbereichs der semitransparenten Farbschicht angepasst ist. Die semitransparente Farbschicht kann dabei sowohl über ausgesparten wie über nicht ausgesparten Bereichen des Dünnschichtelements angeordnet sein.

Bevorzugt weist die semitransparente Farbschicht in einem Spektralbereich, in dem der Farbeindruck des Dünnschichtelements an den Farbeindruck der semitransparenten Schicht angepasst ist, eine Lichtdurchlässigkeit zwischen 30 % und 95 %, besonders bevorzugt zwischen 60 % und 95 % und ganz besonderes bevorzugt zwischen 80 % und 95 % auf.

Die semitransparente Farbschicht kann auf verschiedene Weise aufgebracht werden, mit Vorteil ist sie aufgedruckt, beispielsweise im Siebdruck-, Tiefdruck-, Flexodruck-, oder einem anderen geeigneten Druckverfahren. Die semitransparente Farbschicht kann dabei direkt auf das Dünnschichtelement aufgedruckt sein, es können jedoch zwischen Farbschicht und Dünnschichtelement auch transparente Zwischenschichten vorgesehen sein, die beispielsweise als Schutzschicht oder Kleberschicht wirken. Auch zwischen der Farbschicht und der oben genannten Phasenverzögerungsschicht können derartige transparente Zwischenschichten vorgesehen sein.

Um zusätzliche Merkmale in das Sicherheitselement einzubringen, liegt die semitransparente Farbschicht in bevorzugten Ausgestaltungen in Form von Zeichen, Mustern oder Codierungen vor. Darunter fallen auch Gestaltungen, bei denen die Farbschicht Aussparungen in Form von Zeichen, Mustern oder Codierungen aufweist.

In besonders bevorzugten Gestaltungen ist die semitransparente Farbschicht so gewählt, dass sie den Polarisationszustand hindurchtretenden Lichts aus dem sichtbaren Wellenlängenbereich im Wesentlichen erhält. Auf diese Weise können die von der Phasenverzögerungsschicht gebildeten Muster, Zeichen oder Codierungen sowohl in den farbvariablen als auch in den farbkonstanten Bereichen gleichermaßen sichtbar gemacht werden, wie weiter unten genauer erläutert.

Die semitransparente Farbschicht kann auch mehrere Teilbereiche mit unterschiedlichem Farbeindruck aufweisen, wobei in diesem Fall der Farbeindruck des Dünnschichtelements bei Betrachtung unter vorbestimmten Betrachtungsbedingungen an den Farbeindruck zumindest eines der Teilbereiche angepasst ist. Ein besonders ansprechender Effekt lässt sich erzielen, wenn das Dünnschichtelement und die semitransparente Farbschicht so aufeinander abgestimmt sind, dass bei senkrechter Betrachtung des Sicherheitselements der Farbeindruck des Dünnschichtelements im Wesentlichen dem Farbeindruck zumindest eines Teilbereichs der semitransparenten Farbschicht entspricht. Bei senkrechter Betrachtung, die sich oft bei der ersten Wahrnehmung eines auf einen Wertgegenstand aufgebrachten Sicherheitselements ergibt, vermitteln die farbvariablen und die farbkonstanten Bereiche dann zunächst im Wesentlichen denselben Farbeindruck. Beim Kippen des Sicherheitselements ändert sich der Farbeindruck in den farbvariablen Bereichen, während er in den farbkonstanten überdeckten Bereichen unverändert bleibt.

Bevorzugt ist das Sicherheitselement ein Sicherheitsfaden, ein Sicherheitsband, ein Sicherheitsstreifen, ein Patch oder ein Etikett zum Aufbringen auf ein Sicherheitspapier, Wertdokument oder dergleichen. Es versteht sich, dass das Sicherheitselement auch weitere Schichten, wie etwa Schutzschichten oder zusätzliche Effektschichten mit anderen Sicherheitsmerkmalen, aufweisen kann.

Die Erfindung enthält auch ein Verfahren zum Herstellen eines Sicherheitselements der beschriebenen Art, bei dem
- auf ein Substrat eine Prägelackschicht aufgebracht, und in einem Teilbereich in Form einer gewünschten Reliefstruktur geprägt wird,
- über der Prägelackschicht ein Dünnschichtelement mit Farbkippeffekt angeordnet wird, wobei eine Absorberschicht des Dünnschichtelements in den mit der Reliefstruktur versehenen Bereichen mit Aussparungen versehen wird, in deren Bereich kein Farbkippeffekt erkennbar ist.

In einer vorteilhaften Verfahrensvariante wird über dem Dünnschichtelement bereichsweise eine semitransparente Farbschicht angeordnet, wobei der Farbeindruck des Dünnschichtelements bei Betrachtung unter vorbestimmten Betrachtungsbedingungen an den Farbeindruck zumindest eines Teilbereichs der semitransparenten Farbschicht angepasst wird. Die semi-transparente Farbschicht wird dabei mit Vorteil aufgedruckt, insbesondere im Siebdruck-, Tiefdruck-, oder Flexodruckverfahren.

In einer weiteren vorteilhaften Verfahrensvariante wird über dem Dünnschichtelement bereichsweise eine transparente Phasenverzögerungsschicht angeordnet, die für Licht aus dem sichtbaren Wellenlängenbereich eine phasenschiebende Schicht bildet. Auch die Phasenverzögerungsschicht kann mit Vorteil auf das Dünnschichtelement aufgedruckt werden. Alternativ kann die Phasenverzögerungsschicht auf eine separate Trägerfolie aufgebracht und auf das Dünnschichtelement transferiert werden.

In einer weiteren Alternative wird die Phasenverzögerungsschicht auf das Substrat aufgebracht. Anschließend wird diese Schicht mit einer Prägelackschicht überbeschichtet, die in Teilbereichen geprägt wird. Darüber wird ein Dünnschichtelement aufgebracht, vorzugsweise aufgedampft.

Die Erfindung umfasst ferner ein Sicherheitspapier mit einem Sicherheitselement der beschriebenen Art sowie einen Datenträger, der mit einem solchen Sicherheitselement ausgestattet ist. Bei dem Datenträger kann es sich insbesondere um eine Banknote, ein Wertdokument, einen Pass, eine Urkunde oder eine Ausweiskarte handeln. Die beschriebenen Sicherheitselemente, Sicherheitspapiere oder Datenträger können insbesondere zur Absicherung von Gegenständen beliebiger Art eingesetzt werden.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem erfindungsgemäßen Sicherheitselement,
- Fig. 2: einen Querschnitt durch ein Sicherheitselement nach einem Ausführungsbeispiel der Erfindung,
- Fig. 3: schematisch den visuellen Eindruck eines erfindungsgemäßen Sicherheitselements in Aufsicht,
- Fig. 4: einen Querschnitt durch ein Sicherheitselement nach einem anderen Ausführungsbeispiel der Erfindung,
- Fig. 5: in (a) und (b) Abwandlungen der Ausführungsbeispiele der Figuren 2 bzw. 4,
- Fig. 6: ein Sicherheitselement nach einem weiteren Ausführungsbeispiel der Erfindung, bei dem das Dünnschichtelement und die Reliefstruktur mit einer bereichsweise aufgebrachten semitransparenten Farbschicht und einem versteckten Sicherheitsmerkmal kombiniert sind, und
- Fig. 7: schematisch den visuellen Eindruck des Sicherheitselements der Fig. 6, in (a) bei Betrachtung ohne Hilfsmittel und in (b) bei Betrachtung mit einem aufgelegten Zirkularpolarisator.

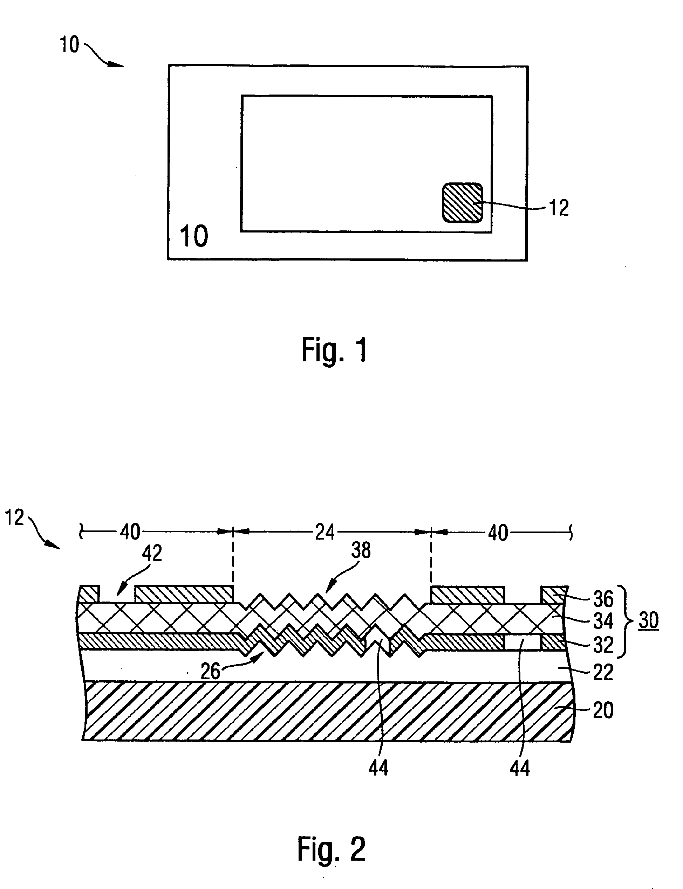

Die Erfindung wird nun am Beispiel einer Banknote erläutert. Fig. 1 zeigt dazu eine schematische Darstellung einer Banknote 10 mit einem erfindungsgemäßen Sicherheitselement 12 in Form eines aufgeklebten Transferelements. Es versteht sich, dass die Erfindung nicht auf Transferelemente und Banknoten beschränkt ist, sondern bei allen Arten von Sicherheitselementen eingesetzt werden kann, beispielsweise bei Etiketten auf Waren und Verpackungen oder bei der Absicherung von Dokumenten, Ausweisen, Pässen, Kreditkarten, Gesundheitskarten und dergleichen. Bei Banknoten und ähnlichen Dokumenten kommen außer Transferelementen beispielsweise auch Sicherheitsfäden und neben Aufsichtselementen auch Durchsichtselemente infrage.

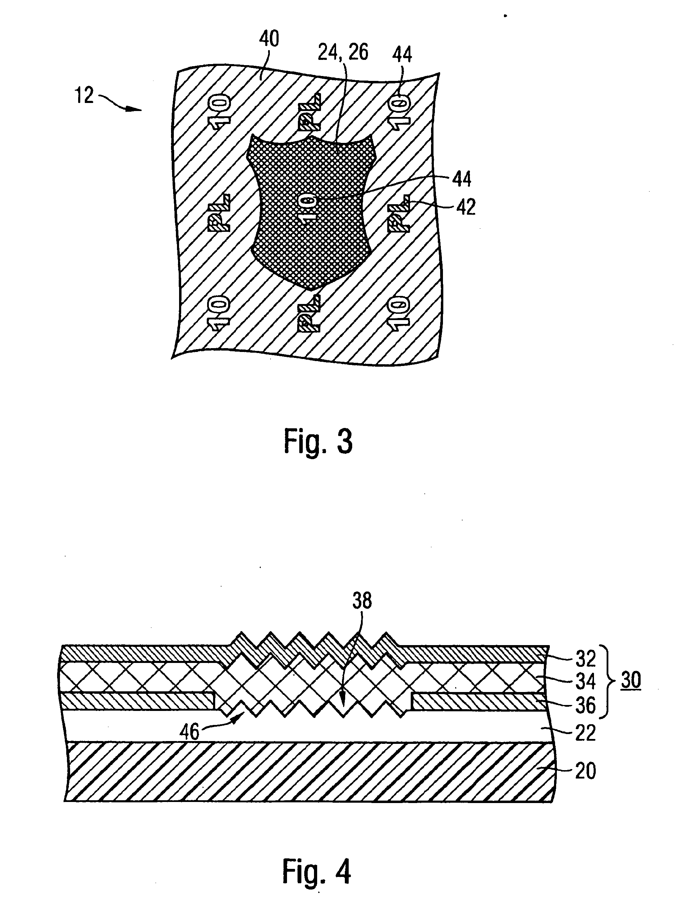

Der Aufbau eines erfindungsgemäßen Sicherheitselements 12 wird nun mit Bezug auf die Figuren 2 und 3 näher erläutert, wobei Fig. 2 einen Querschnitt durch das Sicherheitselement darstellt und Fig. 3 schematisch den visuellen Eindruck des Sicherheitselements im Aufsicht zeigt.

Mit Bezug zunächst auf Fig. 2 enthält das Sicherheitselement 12 eine Trägerfolie 20, beispielsweise eine PET-Folie, auf die eine UV-härtende Prägelackschicht 22 aufgebracht ist. Die Lackschicht 22 wurde dann in einem Teilbereich 24 mit einer Prägung in Form einer diffraktiven Reliefstruktur 26 versehen, die im Ausführungsbeispiel ein Hologramm darstellt. In anderen Gestaltungen kann die Prägung auch ein holographisches Gitterbild, eine hologrammähnliche Beugungsstruktur oder auch eine achromatische Mikrostruktur mit einem nicht farbigen, beispielsweise silbrig matten Erscheinungsbild darstellen.

Auf der gehärteten Lackschicht 22 mit den Reliefstrukturen 26 wurde dann ein Dünnschichtelement 30 mit Farbkippeffekt angeordnet, das eine durch eine opake Aluminiumschicht gebildete Reflexionsschicht 32, eine auf die Reflexionsschicht 32 aufgedampfte dielektrische SiO₂-Abstandsschich 34 und eine teiltransparente Absorberschicht 36 aus Chrom umfasst. Wie weiter oben erläutert, beruht der Farbkippeffekt eines solchen Dünnschichtelements 30 auf Interferenzeffekten durch Mehrfachreflexionen in den Teilschichten 32, 34, 36 des Elements.

Erfindungsgemäß weist die Absorberschicht 36 des Dünnschichtelements 30 in den Teilbereichen 24, in denen die Reliefstrukturen 26 in der Prägelackschicht 22 vorliegen, im Wesentlichen deckungsgleiche Aussparungen 38 auf. Im Bereich dieser Aussparungen 38 erzeugt das Dünnschichtelement 30 wegen des Fehlens der Interferenz keinen Farbkippeffekt, so dass dort das Hologramm 26 mit seinen Farben unbeeinflusst von dem Farbkippeffekt des Dünnschichtelements 30 hervortritt. Umgekehrt wird auch der betrachtungswinkelabhängige Farbeindruck des Dünnschichtelements in den Bereichen 40 außerhalb der Teilbereiche 24 nicht von der Farbaufspaltung der Reliefstrukturen 26 beeinflusst. Insgesamt wird so eine gegenseitige Störung der visuellen Erscheinungsbilder der Reliefstrukturen 26 innerhalb der Teilbereiche 24 und der farbkippenden Bereiche 40 außerhalb der Teilbereiche 24 wirkungsvoll vermieden. Gleichzeitig liegen die farbkippenden Bereiche 40 und die farbaufspaltenden Hologrammbereiche 24, 26 für den Betrachter in perfekter Passerung nebeneinander, wie in der Aufsicht der Fig. 3 schematisch gezeigt.

Um diese Wirkung der perfekten Passerung ohne gegenseitige Störung zu erreichen, ist es nach der Erfindung nicht erforderlich, das Dünnschichtelement 30 selbst gepassert zu den Reliefstrukturen 26 anzuordnen. Wie sich aus Fig. 2 und der dortigen Erläuterung ergibt, genügt es vielmehr, die Aussparungen 38 der Absorberschicht 36 im Wesentlichen gepassert zu den Reliefstrukturen 26 vorzusehen.

Die Herstellung eines derartigen Sicherheitselements 10 kann beispielsweise dadurch erfolgen, dass zunächst eine Trägerfolie 20 mit einem Prägelack 22 beschichtet und dieser in einem Teilbereich 24 in Form der gewünschten Reliefstruktur 26 geprägt wird. Über die teilweise geprägte Lackschicht 22 wird dann vollflächig eine Reflexionsschicht 32 und auf diese eine dielektrische Abstandsschicht 34 aufgedampft. In den Teilbereichen 24 wird auf die Abstandsschicht 34 eine lösliche Waschfarbe aufgedruckt und anschließend vollflächig die Absorberschicht 36 auf die so erhaltene Schichtenfolge aufgedampft. In einem nachfolgenden Waschschritt wird die Absorberschicht 36 in den Teilbereichen 24, in denen Waschfarbe aufgedruckt wurde, zusammen mit dieser durch ein Lösungsmittel abgewaschen, so dass in den Teilbereichen 24 zur Prägung 26 im Wesentlichen deckungsgleiche Aussparungen 38 erzeugt werden. Weitere Einzelheiten zu einem derartigen Waschverfahren können der Druckschrift WO 99/13157 entnommen werden, deren Offenbarung insoweit in die vorliegende Anmeldung aufgenommen wird.

In vorteilhaften Ausgestaltungen kann die Absorberschicht 36 zusätzlich zu den deckungsgleichen Aussparungen 38 weitere Aussparungen 42 in nicht geprägten Bereichen der Lackschicht 22 aufweisen, beispielsweise in Gestalt einer Negativschrift, wie etwa der in Fig. 3 gezeigten Buchstabenfolge "PL". Im Bereich dieser Aussparungen 42 wird der Blick auf die metallische Reflexionsschicht 32 freigegeben, so dass dort anstelle des Farbkippeffekts des Dünnschichtelements 30 der metallische Glanz der Reflexionsschicht 32 den visuellen Eindruck bestimmt.

Auch die Reflexionsschicht 32 kann innerhalb und/oder außerhalb der Teilbereiche 24 mit Aussparungen 44 versehen sein, insbesondere in Form von Zeichen, Mustern oder einer Codierung, wie etwa der in Fig. 3 gezeigten Ziffernfolge "10". In diesen Aussparungsbereichen 44 erscheint das Sicherheitselement 10 transparent oder transluzent, so dass sich dort zusätzlich eine auffällige Kontrastwirkung im Durchlicht ergibt.

Das Dünnschichtelement 30 kann auch mit umgekehrtem Schichtaufbau auf die Prägelackschicht aufgebracht werden, wie in Fig. 4 gezeigt. Bei dem Ausführungsbeispiel der Fig. 4 ist eine Trägerfolie 20 mit einem Prägelack 22 beschichtet und dieser in einem Teilbereich 24 in Form einer gewünschten achromatischen Mattstruktur 46 geprägt. Auf die teilweise geprägte Lackschicht 22 ist ein Dünnschichtelement 30 mit der Schichtreihenfolge Absorberschicht 36, dielektrische Abstandsschicht 34 und Reflexionsschicht 32 aufgebracht. Die Absorberschicht wird dabei, wie im Zusammenhang mit Fig. 2 beschrieben, zumindest im Teilbereich 24 mit Aussparungen 38 versehen, beispielsweise mithilfe des bereits angesprochenen Waschverfahrens.

Derartige Sicherheitselemente mit umgekehrtem Schichtaufbau des Dünnschichtelements eignen sich insbesondere für die Betrachtung von der Unterseite, also der Rückseite der Trägerfolie her. Die Trägerfolie 20 kann nach dem Aufbringen des Sicherheitselements der Fig. 4 auf einen gewünschten Datenträger auch abgezogen werden, beispielsweise über eine geeignete Release- oder Trennschicht. Auch in diesem Fall wird das Sicherheitselement nach der Übertragung von der Unterseite also von der Seite der Prägelackschicht 22 her betrachtet. Es versteht sich, dass auch bei der Erfindungsvariante der Fig. 4 zusätzliche Aussparungen 42 in der Absorberschicht und/ oder Aussparungen 44 in der Reflexionsschicht 32 vorgesehen sein können, wie oben bereits beschrieben.

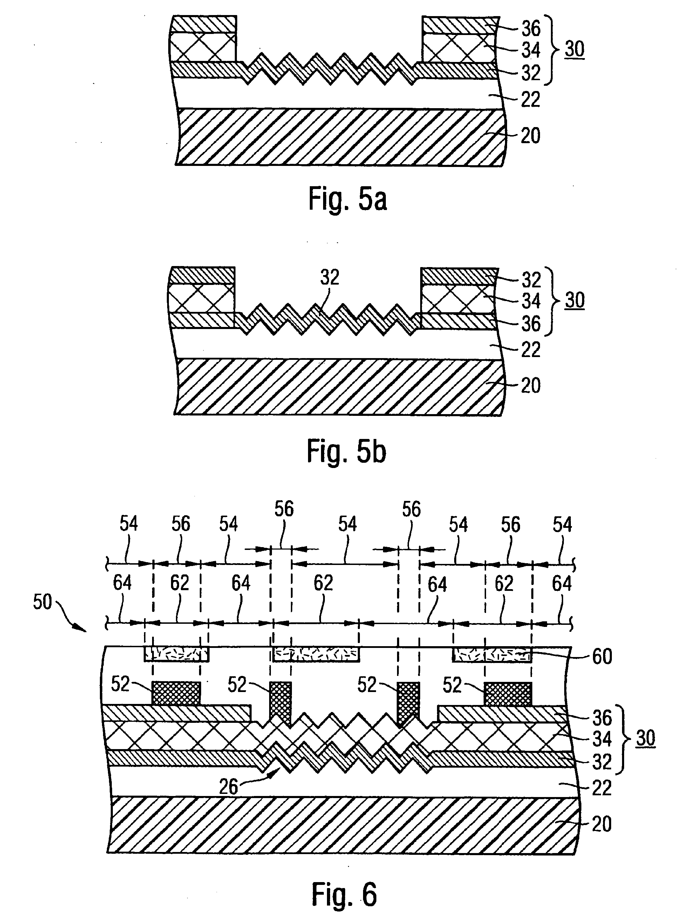

Bei weiteren in der Fig. 5 dargestellten Erfindungsvarianten ist neben der Absorberschicht 36 auch die dielektrische Abstandsschicht 34 des Dünnschichtelements 30 im Teilbereich 24 ausgespart. Eine solche zusätzliche Aussparung der Abstandsschicht 34 kann sowohl mit der Variante der Fig. 2 als auch mit der Variante der Fig. 4 kombiniert werden, wie jeweils in Fig. 5(a) bzw. 5(b) gezeigt.

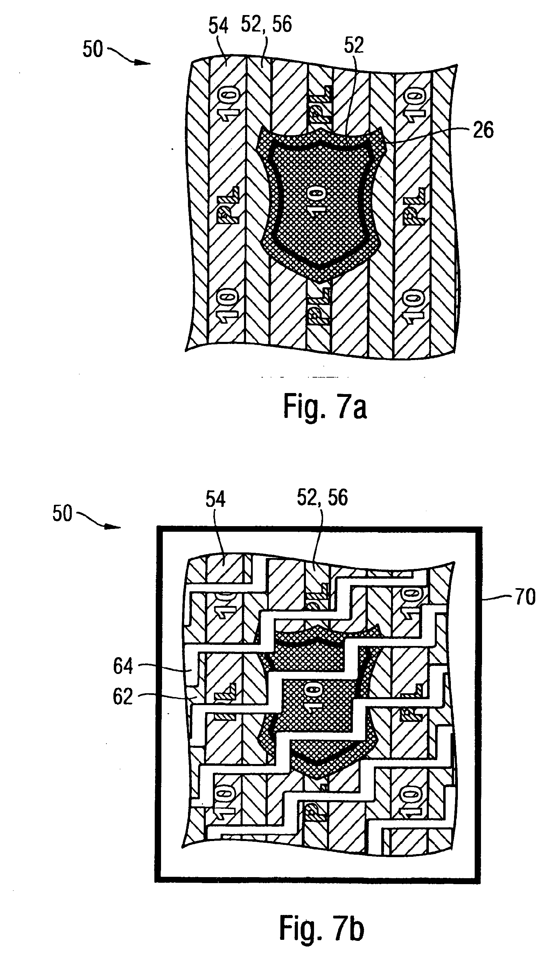

In dem in den Figuren 6 und 7 illustrierten weiteren Ausführungsbeispiel 50 ist über dem Dünnschichtelement 30 bzw. der Prägelackschicht 22 bereichsweise eine semitransparente Farbschicht 52, 52' angeordnet. Das Dünnschichtelement 30 und die semitransparente Farbschicht 52, 52' sind dabei so aufeinander abgestimmt, dass sie bei Betrachtung unter senkrechtem Betrachtungswinkel im Wesentlichen denselben Farbeindruck hervorrufen.

Beim Kippen des Sicherheitselements 50 verändert sich der Farbeindruck des Dünnschichtelements 30 in den nicht überdeckten Bereichen 54 aufgrund des dort auftretenden Farbkippeffekts, während sich der Farbeindruck in den von der Farbschicht 52, 52' überdeckten Bereichen 56 nicht oder nur wenig verändert. Beispielsweise kann das Dünnschichtelement 30 so ausgelegt sein, dass sich sein Farbeindruck von Magenta bei senkrechter Betrachtung zu Grün bei schräger Betrachtung ändert. Darauf abgestimmt, vermittelt die semitransparente Farbschicht 52, 52' bei senkrechter Betrachtung einen ebenfalls magentafarbenen Farbeindruck, der, anders als der Farbeindruck des Dünnschichtelements 30, beim Kippen des Sicherheitselements 12 im Wesentlichen unverändert bleibt.

Die semitransparente Farbschicht kann sowohl über den nicht ausgesparten Bereichen des Dünnschichtelements (Farbschichtbereiche 52), also auch im Bereich der Aussparungen 38 (Farbschichtbereiche 52') angeordnet sein. Auch dort ändert sich aufgrund der Farbaufspaltung des Hologramms 26 in den nicht überdeckten Bereichen 54 der Farbeindruck des Sicherheitselements 50 beim Kippen, während der Farbeindruck in den überdeckten Bereichen 52', 56 im Wesentlichen konstant bleibt. In beiden Fällen bilden die farbkonstanten Bereiche 56 somit visuell einen ruhenden Pol, der im Gegensatz zu den beim Kippen farbvariablen Bereichen 54 steht. Die Kombination von farbvariablen Bereichen 54 und unmittelbar benachbarten, farbkonstanten Bereichen 56 erhöht die visuelle Auffälligkeit des Farbkippeffekts des Dünnschichtelements 30 noch, da das menschliche Auge auf die auftretenden Farbunterschiede stärker reagiert als auf die Farbveränderung an sich.

Bei dem Ausführungsbeispiel der Fig. 6 sind die vorstehend beschriebenen, ohne Hilfsmittel erkennbaren visuellen Effekte mit einem versteckten Sicherheitsmerkmal kombiniert. Neben den bereits beschriebenen Elementen enthält das Sicherheitselement 50 eine transparente Phasenverzögerungsschicht 60, die in Form eines Musters bereichsweise 62 über dem Dünnschichtelement 30 angeordnet ist.

Die Phasenverzögerungsschicht 60 besteht aus einem doppelbrechenden Material, beispielsweise aus nematischem flüssigkristallinem Material. Die Schichtdicke der Phasenverzögerungsschicht 60 ist typischerweise so gewählt, dass ihre Phasenverzögerung einem Gangunterschied zwischen etwa λ/6 und etwa λ/2, vorzugsweise etwa λ/4 entspricht, wobei λ eine Wellenlänge aus dem sichtbaren Spektralbereich darstellt.

Bei Betrachtung des Sicherheitselements 50 mit gewöhnlichem unpolarisiertem Licht und ohne Hilfsmittel sind die Bereiche 62 mit der Phasenverzögerungsschicht 60 praktisch nicht zu erkennen, da die Phasenverzögerung der Schicht 60 auf alle Polarisationsrichtungen des einfallenden Lichts gleichermaßen wirkt und ihre Lichtabsorption vernachlässigbar gering ist. Daraus ergibt sich der in Fig. 7(a) schematisch dargestellte visuelle Eindruck des Sicherheitselements 50 in Aufsicht.

Wird das Sicherheitselement 50 dagegen mit einem aufgelegten Polarisator 70 betrachtet, wie in Fig. 7(b) gezeigt, so treten starke Kontrastunterschiede zwischen den Bereichen 62 mit Phasenverzögerungsschicht und Bereichen 64 ohne Phasenverzögerungsschicht hervor. Das Vorhandensein und die Form des von den Bereichen 62 gebildeten Musters kann so zur zusätzlichen Echtheitsprüfung beispielsweise am Point of Sale oder in Banken eingesetzt werden.

Die Funktionsweise des versteckten Sicherheitsmerkmals wird nun anhand einer λ/4-Phasenverzögerungsschicht 60 und eines aufgelegten Zirkularpolarisators 70, der nur rechtszirkular polarisiertes Licht transmittiert, beispielhaft erläutert. Bei diesen Bedingungen wird von einfallendem unpolarisiertem Licht nur der rechtszirkular polarisierte Anteil von dem Zirkularpolarisator 70 durchgelassen. In den Teilbereichen 64 des Sicherheitselements ohne Phasenverzögerungsschicht 60 wird das rechtszirkular polarisierte Licht von der metallischen Reflektorschicht 32 des Dünnschichtelementes 60 mit umgekehrter Polarisationsrichtung, also als linkszirkular polarisiertes Licht reflektiert. Das reflektierte linkszirkular polarisierte Licht wird vom Zirkularpolarisator 70 gesperrt, so dass die Teilbereiche 64 für den Betrachter dunkel erscheinen.

In den Teilbereichen 62 mit Phasenverzögerungsschicht wird das rechtszirkular polarisierte Licht dagegen durch die Phasenverzögerungsschicht 60 vor der Reflexion an der Reflektorschicht 32 in linear polarisiertes Licht gewandelt. Das nach Reflexion unverändert linear polarisierte Licht durchläuft die Phasenverzögerungsschicht 60 erneut und wird dabei in rechtszirkular polarisiertes Licht gewandelt, das den Zirkularpolarisator 70 bei den gewählten Voraussetzungen ohne Weiteres passieren kann. In den Teilbereichen 62 erscheint das Muster des offenen Sicherheitsmerkmals für den Betrachter daher im Wesentlichen unverändert hell.

Von Bedeutung ist dabei auch, dass die semitransparente Farbschicht 52 den Polarisationszustand des durchtretenden Lichts weitgehend erhält, so dass das von der Phasenverzögerungsschicht 60 gebildete Muster 62, 64 in den farbvariablen und den farbkonstanten Bereichen 54, 56 gleichermaßen sichtbar gemacht werden kann.

Das Dünnschichtelement kann in allen Gestaltungen auch in der Form Absorberschicht / Dielektrikumsschicht / Absorberschicht ausgebildet sein, wobei die Aussparungen_nur in einer der Absorberschichten ausgebildet sein müssen, um den Farbkippeffekt dort zu unterdrücken. Auch eine solche Schichtenfolge weist einen Farbkippeffekt auf, ist aber nicht opak, so dass der Farbkippeffekt auch von der Rückseite des Sicherheitselements sichtbar ist. Sicherheitselemente mit derartigen Dünnschichtelementen können insbesondere bei Dokumenten mit Durchsichtsbereichen zum Einsatz kommen.

Die angesprochenen Aussparungen in den Reflexionsschichten können auch rasterartig, vorzugsweise mit einem geringen Flächenanteil von 40 % oder weniger angelegt sein. Die Aussparungen der Reflexionsschichten fallen dann im Auflicht praktisch nicht auf, sondern treten nur im Durchlicht in Erscheinung.

## Patentansprüche

1. Sicherheitselement (12) zur Absicherung von Wertgegenständen mit
- einem Dünnschichtelement (30) mit Farbkippeffekt, das eine Absorberschicht (36) mit Aussparungen (38) enthält, in deren Bereich kein Farbkippeffekt erkennbar ist, und
- einer Reliefstruktur, (26) die nur in ausgesparten Absorberschichtbereichen unterhalb des Dünnschichtelements (30) angeordnet ist.

2. Sicherheitselement nach Anspruch 1, **dadurch gekennzeichnet, dass** die Aussparungen (38) in der Absorberschicht in Form von Zeichen, Mustern oder Codierungen vorliegen.

3. Sicherheitselement nach Anspruch 1 oder 2, **dadurch gekennzeichnet, dass** die Reliefstruktur (26) in einer Prägelackschicht (22) vorliegt.

4. Sicherheitselement nach wenigstens einem der Ansprüche 1 bis 3, **dadurch gekennzeichnet, dass** die Reliefstruktur (26) eine diffraktive Struktur, wie etwa ein Hologramm, ein holographisches Gitterbild oder eine hologrammähnliche Beugungsstruktur darstellt, oder eine achromatische Struktur, wie etwa eine Mattstruktur, eine Mikrospiegelanordnung, ein Blazegitter mit einem sägezahnartigen Furchenprofil oder eine Fresnellinsen-Anordnung darstellt.

5. Sicherheitselement nach wenigstens einem der Ansprüche 1 bis 4, **dadurch gekennzeichnet, dass** das Dünnschichtelement (30) eine Reflexionsschicht (32), eine Absorberschicht (36) und eine zwischen der Reflexionsschicht und der Absorberschicht angeordnete dielektrische Abstandsschicht (34) enthält.

6. Sicherheitselement nach Anspruch 5, **dadurch gekennzeichnet, dass** das Dünnschichtelement (30) in der Reihenfolge Reflexionsschicht (32), dielektrische Abstandsschicht (34) und Absorberschicht (36) über der Reliefstruktur (26) angeordnet ist, oder das Dünnschichtelement (30) in der Reihenfolge Absorberschicht, dielektrische Abstandsschicht und Reflexionsschicht über der Reliefstruktur angeordnet ist.

7. Sicherheitselement nach wenigstens einem der Ansprüche 1 bis 4, **dadurch gekennzeichnet, dass** das Dünnschichtelement (30) zumindest eine erste Absorberschicht, eine zweite Absorberschicht und eine zwischen den beiden Absorberschichten angeordnete dielektrische Abstandsschicht enthält, wobei zumindest eine der Absorberschichten die genannten Aussparungen enthält.

8. Sicherheitselement nach wenigstens einem der Ansprüche 1 bis 7, **dadurch gekennzeichnet, dass** das Dünnschichtelement (30) eine dielektrische Abstandsschicht (34) enthält, die in ausgesparten Absorberschichtbereichen (38) ebenfalls ausgespart ist.

9. Sicherheitselement nach wenigstens einem der Ansprüche 1 bis 8, **dadurch gekennzeichnet, dass** das Dünnschichtelement (30) eine Reflexionsschicht (32) mit Aussparungen in Form von Mustern, Zeichen oder Codierungen aufweist, die transparente oder transluzente Bereiche in dem Dünnschichtelement bilden.

10. Sicherheitselement nach wenigstens einem der Ansprüche 1 bis 9, **dadurch gekennzeichnet, dass** über dem Dünnschichtelement (30) bereichsweise eine transparenten Phasenverzögerungsschicht (60) angeordnet ist, die für Licht aus dem sichtbaren Wellenlängenbereich eine phasenschiebende Schicht bildet, und die Phasenverzögerungsschicht vorzugsweise in Form von Mustern, Zeichen oder einer Codierung vorliegt.

11. Sicherheitselement nach wenigstens einem der Ansprüche 1 bis 10, **dadurch gekennzeichnet, dass** über dem Dünnschichtelement (30) bereichsweise eine semitransparente Farbschicht (52, 52') angeordnet ist, wobei der Farbeindruck des Dunnschichtelements bei Betrachtung unter vorbestimmten Betrachtungsbedingungen an den Farbeindruck zumindest eines Teilbereichs der semitransparenten Farbschicht angepasst ist und die semitransparente Farbschicht vorzugsweise in Form von Zeichen, Mustern oder Codierungen vorliegt.

12. Verfahren zum Herstellen eines Sicherheitselements (12) nach wenigstens einem der Ansprüche 1 bis 11, bei dem
- auf ein Substrat (20) eine Prägelackschicht (22) aufgebracht, und in einem Teilbereich in Form einer gewünschten Reliefstruktur (26) geprägt wird,
- über der Prägelackschicht (22) ein Dünnschichtelement (30) mit Farbkippeffekt angeordnet wird, wobei eine Absorberschicht (36) des Dünnschichtelements in den mit der Reliefstruktur versehenen Bereichen mit Aussparungen (38) versehen wird, in deren Bereich kein Farbkippeffekt erkennbar ist, und
optional über dem Dünnschichtelement bereichsweise eine semitransparente Farbschicht (52,52') angeordnet wird, wobei der Farbeindruck des Dünnschichtelements bei Betrachtung unter vorbestimmten Betrachtungsbedingungen an den Farbeindruck zumindest eines Teilbereichs der semitransparenten Farbschicht angepasst wird, und die semitransparente Farbschicht vorzugsweise aufgedruckt wird, insbesondere im Siebdruck-, Tiefdruck-, oder Flexodruckverfahren.

13. Sicherheitspapier für die Herstellung von Sicherheits- oder Wertdokumenten, wie Banknoten, Schecks, Ausweiskarten, Urkunden oder dergleichen, das mit einem Sicherheitselement nach wenigstens einem der Ansprüche 1 bis 11 ausgestattet ist, wobei das Sicherheitspapier vorzugsweise ein Trägersubstrat aus Papier oder Kunststoff umfasst.

14. Datenträger, insbesondere Markenartikel, Wertdokument oder dergleichen, mit einem Sicherheitselement nach einem der Ansprüche 1 bis 11.

15. Verwendung eines Sicherheitselements nach wenigstens einem der Ansprüche 1 bis 11, eines Sicherheitspapiers nach Anspruch 13, oder eines Datenträgers nach Anspruch 14 zur Fälschungssicherung von Waren beliebiger Art.

## Claims

1. A security element (12) for securing valuable articles, having
- a thin-film element (30) that has a color-shift effect and that includes an absorber layer (36) having gaps (38) in the region of which no color-shift effect is perceptible, and
- a relief pattern (26) that is arranged only in gapped absorber layer regions below the thin-film element (30).

2. The security element according to claim 1, **characterized in that** the gaps (38) in the absorber layer are present in the form of characters, patterns or codes.

3. The security element according to claim 1 or 2, **characterized in that** the relief pattern (26) is present in an embossing lacquer layer (22).

4. The security element according to at least one of claims 1 to 3, **characterized in that** the relief pattern (26) constitutes a diffractive pattern, such as a hologram, a holographic grating image or a hologram-like diffraction pattern, or an achromatic pattern, such as a matte pattern, a micromirror arrangement, a blaze lattice having a sawtooth-like groove profile or a Fresnel lens arrangement.

5. The security element according to at least one of claims 1 to 4, **characterized in that** the thin-film element (30) includes a reflection layer (32), an absorber layer (36) and a dielectric spacing layer (34) disposed between the reflection layer and the absorber layer.

6. The security element according to claim 5, **characterized in that** the thin-film element (30) is arranged over the relief pattern (26) in the sequence reflection layer (32), dielectric spacing layer (34) and absorber layer (36), or that the thin-film element (30) is arranged over the relief pattern in the sequence absorber layer, dielectric spacing layer and reflection layer.

7. The security element according to at least one of claims 1 to 4, **characterized in that** the thin-film element (30) includes at least a first absorber layer, a second absorber layer and a dielectric spacing layer arranged between the two absorber layers, at least one of the absorber layers including said gaps.

8. The security element according to at least one of claims 1 to 7, **characterized in that** the thin-film element (30) includes a dielectric spacing layer (34) that, in gapped absorber layer regions (38), is likewise gapped.

9. The security element according to at least one of claims 1 to 8, **characterized in that** the thin-film element (30) comprises a reflection layer (32) having gaps in the form of patterns, characters or codes that form transparent or translucent areas in the thin-film element.

10. The security element according to at least one of claims 1 to 9, **characterized in that** over the thin-film element (30) is arranged, in some regions, a transparent phase-delay layer (60) that forms a phase-shifting layer for light from the visible wavelength range, and that the phase-delay layer is preferably present in the form of patterns, characters or a code.

11. The security element according to at least one of claims 1 to 10, **characterized in that**, in some regions, a semi-transparent ink layer (52, 52') is arranged over the thin-film element (30), the color impression of the thin-film element when viewed under predetermined viewing conditions being adapted to the color impression of at least one sub-region of the semi-transparent ink layer, and that the semi-transparent ink layer is preferably present in the form of characters, patterns or codes.

12. A method for manufacturing a security element (12) according to at least one of claims 1 to 11, in which
- an embossing lacquer layer (22) is applied to a substrate (20), and is embossed in the form of a desired relief pattern (26) in a sub-region,
- a thin-film element (30) having a color-shift effect is arranged over the embossing lacquer layer (22), an absorber layer (36) of the thin-film element being provided, in the regions that are provided with the relief pattern, with gaps (38) in the region of which no color-shift effect is perceptible, and
- optionally, in some regions, a semi-transparent ink layer (52, 52') is arranged over the thin-film element, the color impression of the thin-film element when viewed under predetermined viewing conditions being adapted to the color impression of at least one sub-region of the semi-transparent ink layer, and the semi-transparent ink layer is preferably imprinted, especially in the screen printing, intaglio printing, or flexographic printing method.

13. A security paper for manufacturing security or value documents, such as banknotes, checks, identification cards, certificates or the like, that are furnished with a security element according to at least one of claims 1 to 11, wherein the security paper preferably comprises a carrier substrate composed of paper or plastic.

14. A data carrier, especially a branded article, value document or the like, having a security element according to one of claims 1 to 11.

15. A use of a security element according to at least one of claims 1 to 11, of a security paper according to claim 13, or of a data carrier according to claim 14 for securing goods of any kind against counterfeiting.

## Revendications

1. Elément de sécurité (12) pour la protection d'objets de valeur, comportant
- un élément en couche mince (30) à effet goniochromatique, qui contient une couche d'absorption (36) comportant des évidements (38), dans la zone desquels aucun effet goniométrique n'est reconnaissable, et
- une structure en relief (26), qui est disposée uniquement dans les zones évidées de la couche d'absorption en-dessous de l'élément en couche mince (30).

2. Elément de sécurité selon la revendication 1, **caractérisé en ce que** les évidements (38) se présentent dans la couche d'absorption sous forme de caractères, de modèles ou de codages.

3. Elément de sécurité selon la revendication 1 ou 2, **caractérisé en ce que** la structure en relief (26) est présente dans une couche de vernis d'estampage (22).

4. Elément de sécurité selon au moins l'une des revendications 1 à 3, **caractérisé en ce que** la structure en relief (26) représente une structure de diffraction, telle que par exemple un hologramme, un motif holographique à réseau diffractant ou une structure de diffraction de type hologramme, ou une structure achromatique telle que par exemple une structure mate, un arrangement de micro-miroirs, un réseau blazé comportant un profil de sillons en dents de scie, ou un arrangement de lentilles de Fresnel.

5. Elément de sécurité selon au moins l'une des revendications 1 à 4, **caractérisé en ce que** l'élément en couche mince (30) contient une couche de réflexion (32), une couche d'absorption (36) et une couche d'écartement diélectrique (34) disposée entre la couche de réflexion et la couche d'absorption.

6. Elément de sécurité selon la revendication 5, **caractérisé en ce que** l'élément en couche mince (30) est disposé au-dessus de la structure en relief (26) dans l'ordre couche de réflexion (32), couche d'écartement diélectrique (34) et couche d'absorption (36), ou l'élément en couche mince (30) est disposé au-dessus de la structure en relief dans l'ordre couche d'absorption, couche d'écartement diélectrique et couche de réflexion.

7. Elément de sécurité selon au moins l'une des revendications 1 à 4, **caractérisé en ce que** l'élément en couche mince (30) contient au moins une première couche d'absorption, une deuxième couche d'absorption et une couche d'écartement diélectrique disposée entre les deux couches d'absorption, au moins l'une des couches d'absorption contenant les évidements mentionnés.

8. Elément de sécurité selon au moins l'une des revendications 1 à 7, **caractérisé en ce que** l'élément en couche mince (30) contient une couche d'écartement diélectrique (34), qui est elle aussi évidée dans les zones évidées (38) de la couche d'absorption.

9. Elément de sécurité selon au moins l'une des revendications 1 à 8, **caractérisé en ce que** l'élément en couche mince (30) comprend une couche de réflexion (32) comportant des évidements sous forme de modèles, de caractères ou de codages, qui forment des zones transparentes ou translucides dans l'élément en couche mince.

10. Elément de sécurité selon au moins l'une des revendications 1 à 9, **caractérisé en ce qu'**au-dessus de l'élément en couche mince (30) est disposée par zones une couche transparente de retard de phase (60), qui pour la lumière provenant de la zone à longueur d'onde visible forme une couche de déphasage, et la couche de retard de phase se présente de préférence sous forme de modèles, de caractères ou d'un codage.

11. Elément de sécurité selon au moins l'une des revendications 1 à 10, **caractérisé en ce qu'**au-dessus de l'élément en couche mince (30) est disposée, par zones, une couche colorée semi-transparente (52, 52'), l'impression colorée de l'élément en couche mince, dans le cas d'une observation dans des conditions prédéterminées d'observation, est adaptée à l'impression colorée d'au moins une zone partielle de la couche colorée semi-transparente, et la couche colorée semi-transparente se présente de préférence sous forme de caractères, de modèles ou de codages.

12. Procédé de fabrication d'un élément de sécurité (12) selon au moins l'une des revendications 1 à 11, dans lequel
- on applique sur un substrat (20) une couche de vernis d'estampage (22), et on gaufre dans une zone partielle sous forme d'une structure en relief souhaitée (26),
- au-dessus de la couche de vernis d'estampage (22), on dispose un élément en couche mince (30) à effet goniochromatique, la couche d'absorption (36) de l'élément en couche mince étant, dans les zones pourvues de la structure en relief, pourvue d'évidements (38), dans la zone desquels aucun effet goniométrique n'est reconnaissable, et
en option, au-dessus de l'élément en couche mince, on dispose par zones une couche colorée semi-transparente (52, 52'), l'impression colorée de l'élément en couche mince, dans le cas d'une observation dans des conditions prédéterminées d'observation, étant adaptée à l'impression colorée d'au moins une zone partielle de la couche colorée semi-transparente, et la couche colorée semi-transparente est de préférence sur-imprimée, en particulier par le procédé de sérigraphie, d'héliographie ou flexographie.

13. Papier de sécurité pour la fabrication de documents de sécurité ou de valeurs, tels que des billets de banque, des chèques, des cartes d'identité, des certificats ou analogues, qui est muni d'un élément de sécurité selon au moins l'une des revendications 1 à 11, le papier de sécurité englobant de préférence un substrat support en papier ou en plastique.

14. Support de données, en particulier article de marque, document de valeurs ou analogues, comportant un élément de sécurité selon l'une des revendications 1 à 11.

15. Utilisation d'un élément de sécurité selon au moins l'une des revendications 1 à 11, d'un papier de sécurité selon la revendication 13 ou d'un support de données selon la revendication 14, pour la protection d'objets de toute nature.
